# EUROPEAN PATENT SPECIFICATION

(11) **EP 1 501 243 B1**
(45) Date of publication and mention of the grant of the patent: **31.08.2011**
(21) Application number: 03719211.9
(22) Date of filing: 25.04.2003
(51) Int. Cl.: H04W 48/14

(54) **RADIO COMMUNICATION SYSTEM, RADIO COMMUNICATION TERMINAL, AND METHOD FOR PARTICIPATING IN RADIO COMMUNICATION SYSTEM**
FUNKKOMMUNIKATIONSSYSTEM, FUNKKOMMUNIKATIONSENDGERÄT UND VERFAHREN ZUR TEILNAHME IN EINEM FUNKKOMMUNIKATIONSSYSTEM
SYSTEME DE COMMUNICATION RADIO, TERMINAL DE COMMUNICATION RADIO ET PROCEDE POUR PARTICIPER DANS UN SYSTEME DE COMMUNICATION RADIO

(30) Priority: 26.04.2002 JP 2002126198
(43) Date of publication of application: 26.01.2005
(73) Proprietor: Sony Corporation, Tokyo 141-0001 (JP)
(72) Inventor: Kunihiro, Takushi, SONY CORPORATION, Tokyo 141-0001 (JP)
(74) Representative: Smith, Samuel Leonard
(86) International application number: PCT/JP2003/005368
(87) International publication number: WO 2003/092223

(56) References cited:
- EP-A2- 1 039 696
- WO-A2-00/30374
- WO-A2-01/69869
- WO-A2-02/25871
- JP-A- 9 186 690
- JP-A- 9 186 690
- JP-A- 2002 108 733

## Description

The present invention relates to a wireless communication system fully implementing wired LAN (Local Area Network) functions, a wireless communication terminal used for the system, and a method of association in the wireless communication system for the wireless communication terminal.

With the increasing improvement of computer capabilities, it has become a common practice to connect a plurality of computers with each other to constitute a LAN for sharing information such as files and data, sharing peripheral devices such as printers, and exchanging various information such as transferring e-mail and data.

A conventional LAN wiredly connects computers using optical fiber cables, coaxial cables, or twisted pair cables. However, thewiredLANnecessitates the connection construction, making it difficult to construct a LAN and complicating the cabling. After the LAN is established, a range of moving devices is inconveniently restricted by cable lengths.

Particular attention is paid to a wireless LAN as a system that can free users from the problem of cabling for conventional wired LANs. The use of wireless LANs can eliminate most of cables from work spaces in offices and the like. Consequently, terminals such as personal computers (PCs) can be relatively easily moved.

For communication between terminals in such a small-size wireless network, there is available a technique to provide the network with access points and always pass through the access points for communication even if terminals communicate with each other. According to the technique, each terminal just needs to ensure communication with the access point. As a result, communication with all the other terminals can be ensured.

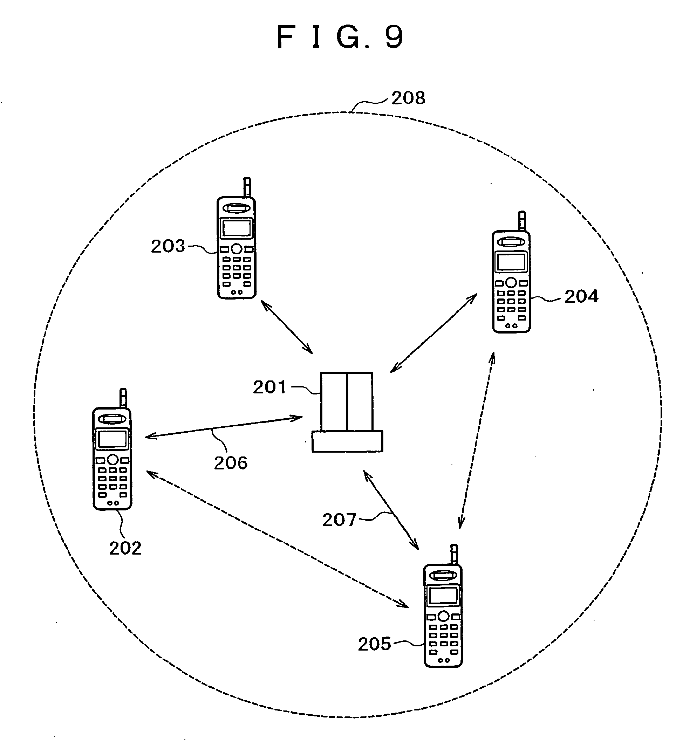

FIG. 9 shows a configuration example of a wireless LAN system (wireless communication system) usinganaccesspoint. In FIG. 9, the reference numeral 201 represents an access point for wireless communication. The reference numerals 202 through 205 denote wireless communication terminals. According to the wireless LAN system in FIG. 9, all terminal communicate with each other through intermediation of the access point 201 as indicated with solid-line arrows.

For example, communication between the terminals 202 and 205 is implemented through communication 206 between the terminal 202 and the access point 201 and communication 207 between the terminal 205 and the access point 201.

That is to say, there is no direct communication between the terminals 202 and 205 or between the terminals 204 and 205 as indicated with broken-line arrows in FIG. 9. The terminals communicate with each other always via the access point.

If the communication is established between each of the terminals 202 through 205 and the access point 201, the communication with all the other terminals is also ensured. In other words, it is possible to constitute a highly reliable wireless LAN system capable of safe communication without consideration for the reachability of communication between the terminals as indicated by the broken lines.

However, the wireless LAN system in FIG. 9 is costly because the access point is needed even for communication between terminals. Further, it is necessary to consider a place to dispose the access point (geographical disposition), causing a hindrance to a simple network configuration.

As another technique, there is available "ad hoc communication" that provides direct, asynchronous, wireless communication between terminals without using access points. This system is cost-effective because no access points are needed. On the contrary, the ad hoc communication system loses the advantage of the communication using access points, i.e., ensuring communication with all the other terminals belonging to the same network simply by ensuring the communication with the access point.

When a wireless LAN system is applied to the conventional wired LAN, it is a general technique to replace physical transmission media of the existing wired communication system with wireless equivalents. In this case, it is important to keep changes in the wired LAN layer structure minimal for maintaining the protocol compatibility and decreasing works for the protocol change.

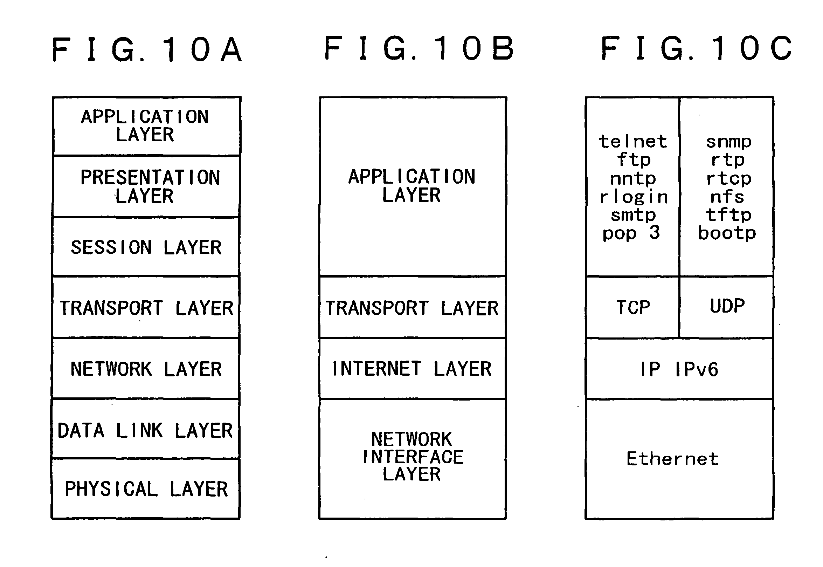

FIGS. 10A through 10C show layer structures of the wireless communication system and the wired communication system. FIG. 10A shows the OSI (Open System Interconnection) reference model. FIG. 10B shows the TCP/IP (Transmission Control Protocol/Internet Protocol). FIG. 10C shows corresponding protocols in each layer in FIGS. 10A and 10B.

As shown in FIG. 10C, a general wired LAN uses the IP or IPv6 protocol for the Internet layer and the Ethernet (registered trademark) protocol for the network interface layer.

As seen from FIGS. 10A through 10C, replacing the wired LAN with a wireless LAN (wireless communication system) means replacing the Ethernet (registered trademark) protocol function with an equivalent wireless communication system.

In this case, the wireless LAN system also needs to implement the broadcast communication function that is important for Ethernet (registered trademark). For this reason, if the "ad hoc communication" mode cannot ensure the communicability between terminals, the broadcast communication cannot be provided as intended. This is a problem to implementation of the function equivalent to the wired LAN on the wireless communication system that uses the ad hoc communication.

JP-A-9-186,690 discloses an example of a wireless communication system in which apparatus perform mutual communication of identification codes to build up list of identification codes of apparatus in network, with which communication is possible either directly or where direct communication is impossible through another communication apparatus as a relay.

The present invention has been made in consideration of the foregoing. It is therefore an object of the present invention to provide a wireless communication system, a wireless communication apparatus used for this system, and a method of association in the wireless communication system capable of ensuring information reachability in broadcast communication between wireless communication terminals in a wireless communication system using "ad hoc communication" to perform communication between wireless communication terminals without intermediation of access points.

According to a first aspect of the present invention, there is provided a wireless communication system comprising a plurality of wireless communication terminals having unique terminal identifiers by using one of the plurality of wireless communication terminals as a terminal having a master wireless communication unit to form an ad hoc network,
wherein the master wireless communication unit comprises:
an association request receiving means for receiving a request transmitted at any time from another wireless communication terminal to associate with a network of the wireless communication system;
an associate terminal information forming means for forming associate terminal information comprising a set of the terminal identifiers of already associating wireless communication terminals including the terminal identifier which is assigned to the other wireless communication terminal as an origin of the association request and is included in the association request received by the association request receiving means; and
an associate terminal information transmitting means for periodically broadcasting the associate terminal information formed by the associate terminal information forming means,
wherein a wireless communication terminal attempting to associate with a network of the wireless communication system comprises:
an associate terminal information receiving means for receiving the associate terminal information transmitted by the associate terminal information transmitting means of the master wireless communication unit;
a confirmation means for enabling and confirming possibility of communication with already associating wireless communication terminals specified by the terminal identifiers included in the associate terminal information received by the associate terminal information receiving means;
an association request generating means for generating, when the confirmation means confirms possibility of communication with all the already associating wireless communication terminals, an association request including a terminal identifier of the wireless communication terminal attempting at association;
an association request transmitting means for transmitting the association request generated by the association request generating means to the master wireless communication terminal; and
a notification means for notifying, when the confirmation means cannot confirm communication with all of the already associating wireless communication terminals, that no communication reachability can be ensured.

A wireless communication terminal that turns on first becomes a master wireless communication terminal, for example. The master wireless communication terminal receives an association request from another wireless communication terminal via the association request receiving means.

The associate terminal information comprises a set of terminal identifiers of the already associating wireless communication terminals including terminal identifiers contained in the received association request and the terminal identifier of the master wireless communication terminal itself. The associate terminal information forming means forms the associate terminal information. The associate terminal information transmitting means broadcasts the associate terminal information.

The already associating wireless communication terminal and a wireless communication terminal attempting at association use the associate terminal information from the master wireless communication terminal to identify which wireless communication terminals already associate with a network of the wireless communication system and are capable of communication.

The wireless communication terminal attempting to associate with the wireless communication system uses the associate terminal information receiving means to receive the associate terminal information from the master wireless communication terminal. The received associate terminal information contains terminal identifiers of the wireless communication terminals already associating with the wireless communication system. Based on the terminal identifiers, the confirmation means confirms whether or not communication is available between the wireless communication terminals having the terminal identifiers.

The confirmation means may confirm the availability of communication with all the associating wireless communication terminals. In this case, the association request generating means generates an association request including the local terminal's identifier. The association request transmitting means transmits the terminal identifier to the master wireless communication terminal. In this manner, the would-be associate terminal is identified to have been associated in the network of the wireless communication system.

When the wireless communication terminal attempts to newly associate with a network of the wireless communication system to wirelessly communicate with the already associating wireless communication terminals, that wireless communication terminal communicates with each of the already associating wireless communication terminals. When the communication with the existing wireless communication terminals is successful, the would-be associate wireless communication terminal can actually associate with the network of the wireless communication system.

That is to say, the wireless communication terminal can associate with the wireless communication system after ensuring both the unicast (one-to-one) communication and the broadcast communication with each of the already associating wireless communication terminals. It is possible to construct the wireless communication system inheriting the broadcast communication capability of conventional wired LANs.

The wireless communication terminal attempting to newly associate with a network of the wireless communication system may not be able to confirm communication with all the associating wireless communication terminals through the use of the confirmation means. In this case, that wireless communication terminal is notified that there is a wireless communication terminal not ensuring the communication reachability.

If the would-be associate wireless communication terminal is incapable of one-to-one communication with all the associating wireless communication terminals, this situation is notified to a user. The user of the wireless communication terminal can quickly take proper action such as translocating the wireless communication terminal or providing a repeater. It is possible to fast provide an environment for enabling one-to-one communication with all the associating wireless communication terminals and associate with the network of the wireless communication system.

According to further aspects of the present invention, there is provided a wireless communication terminal for use in a system in accordance with the first aspect and a similar method of association.

The following describes an embodiment of the present invention, with reference to the accompanying drawings, in which:
FIG. 1 illustrates an embodiment of the wireless communication system according to the present invention;
FIG. 2 is a block diagram showing an embodiment of the wireless communication terminal according to the present invention;
FIG. 3 is a flowchart showing operations of the wireless communication terminal newly associating with a cluster;
FIG. 4 is a flowchart showing operations of a wireless communication terminal to become the new cluster master and a wireless communication terminal that has become the new cluster master;
FIG. 5 is a flowchart showing operations of a wireless communication terminal already associating with the cluster and cluster-constituting terminals including the cluster master;
FIG. 6 is a sequence diagram showing operations when no existing cluster is available and a cluster is generated between two wireless communication terminals, i.e., wireless communication terminals A and B;
FIG. 7 is a sequence diagram showing operations when a cluster is already available and another new wireless communication terminal associates with the cluster;
FIG. 8 is a sequence diagram showing operations when a cluster is already available, another new wireless communication terminal associates with the cluster, and a successful communication confirmation is incomplete due to some cause;
FIG. 9 exemplifies a conventional wireless communication system provided with an access point; and
FIGS. 10A through 10C show layer structures of the wireless communication system and a wired communication system.

### [Outline of the wireless communication system]

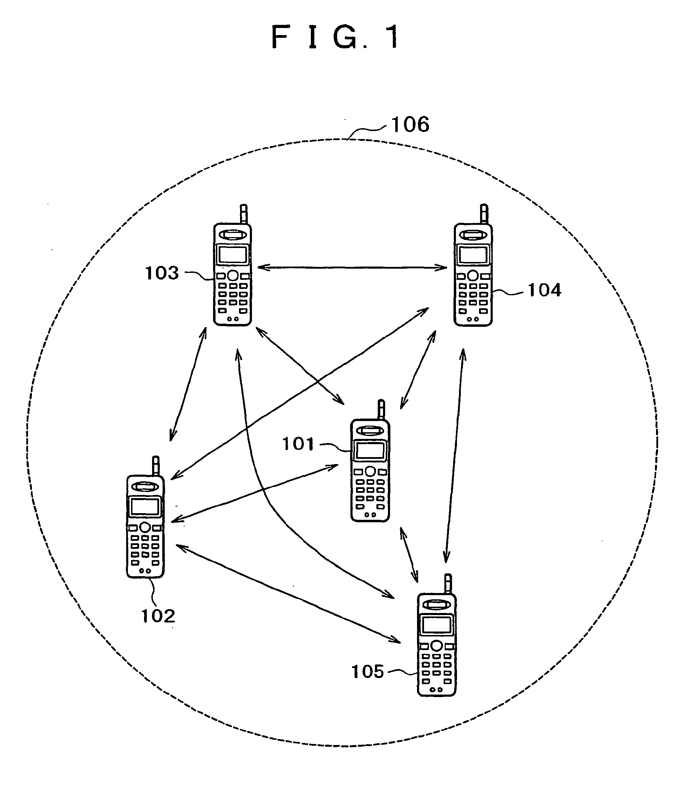

FIG. 1 outlines the wireless communication system according to the embodiment of the wireless communication system, the wireless communication terminal, and the method of association in the wireless communication system according to the present invention. As shown in FIG. 1, the wireless communication system according to the embodiment is configured by using the ad hoc communication system that enables direct communication between wireless communication terminals without using an access point.

The example in FIG. 1 shows that a network contains five wireless communication terminals 101 through 105. As mentioned above, the ad hoc communication system configures a communication network by allowing a plurality of wireless communication terminals to directly communicate with each other.

In FIG. 1, the reference numeral 106 denotes a formed network. The following description uses a term "cluster" to represent a set of terminals that constitutes the network. According to the example in FIG. 1, the terminals 101 through 105 constitute a cluster that forms the network 106.

The wireless communication system according to the embodiment in FIG. 1 provides direct communication between the wireless communication terminals as indicated by solid-line arrows. In this case, there maybe possibilities of unsuccessful communication because radio waves are attenuated or shielded by obstacles depending on geographical dispositions of the wireless communication terminals.

In FIG. 1, for example, let us consider that the reachability is ensured for communication between the terminals 102 and 103, the terminals 103 and 104, the terminals 104 and 105, the terminals 102 and 101, and the terminals 102 and 105, and that no reachability (information reachability) is ensured for communication between the terminals 102 and 104. In this state, the wireless communication terminals 101, 103, and 105 can receive a radio wave generated from the wireless communication terminal 102, but the wireless communication terminal 104 cannot.

The wireless communication terminal 102 cannot actually communicate with the wireless communication terminal 104. It is possible to determine whether or not communication with the wireless communication terminal 104 is possible only when the wireless communication terminal 102 starts communicating with the wireless communication terminal 104. During broadcast communication that does not necessarily wait for a response from the communication destination, there is no way of determining whether or not the wireless communication terminal 104 receive a communication from the wireless communication terminal 102.

This state cannot ensure the reachability for the broadcast communication between the wireless communication terminals constituting the cluster. Such wireless communication system cannot be used as an alternative to Ethernet (registered trademark), i.e., the conventional wired LAN protocol. That is to say, the wireless communication system cannot be configured in compliance with Ethernet (registered trademark). On the other hand, the wireless communication system according to the embodiment solves this problem and provides a control technique to ensure the reachability for communication between the wireless communication systems.

In the wireless communication system, a plurality of wireless communication terminal provides a network environment capable of intercommunication called a cluster. Each wireless communication terminal has a unique terminal identifier. One of wireless communication terminals in the cluster becomes a cluster master (master wireless communication terminal) . The broadcast communication is performed to deliver cluster information (associate terminal information), i.e., terminal identifiers of all the wireless communication terminals in the cluster at a specified cycle.

When a user's terminal is going to newly associate with the cluster, it receives the cluster information delivered by the broadcast communication. Communication is performed between all the wireless communication terminals whose terminal identifiers are described in the cluster information to confirm whether or not a communication from the own terminal reaches. The terminal can associate with the cluster when the communication reachability is confirmed with respect to all the wireless communication terminals. When the reachability is not confirmed for all the associating wireless communication terminals indicated by the terminal identifiers in the cluster information, a user is notified that the reachability is not ensured.

When a new terminal is going to associate with a network (cluster) formed by the wireless communication system according to the embodiment, the system confirms whether or not a communication from the new terminal reaches all the wireless communication terminals registered to the cluster information. When the reachability is confirmed for all the terminals, the system ensures the communication between all the terminals associating with the cluster. The new terminal is allowed to associate with the cluster. Otherwise, the terminal is not allowed to associate with the cluster. The system then notifies the user of the terminal tried to newly associate with the cluster that action should be taken to enable communication with all the terminals in the cluster.

### [Configuration of the wireless communication terminal]

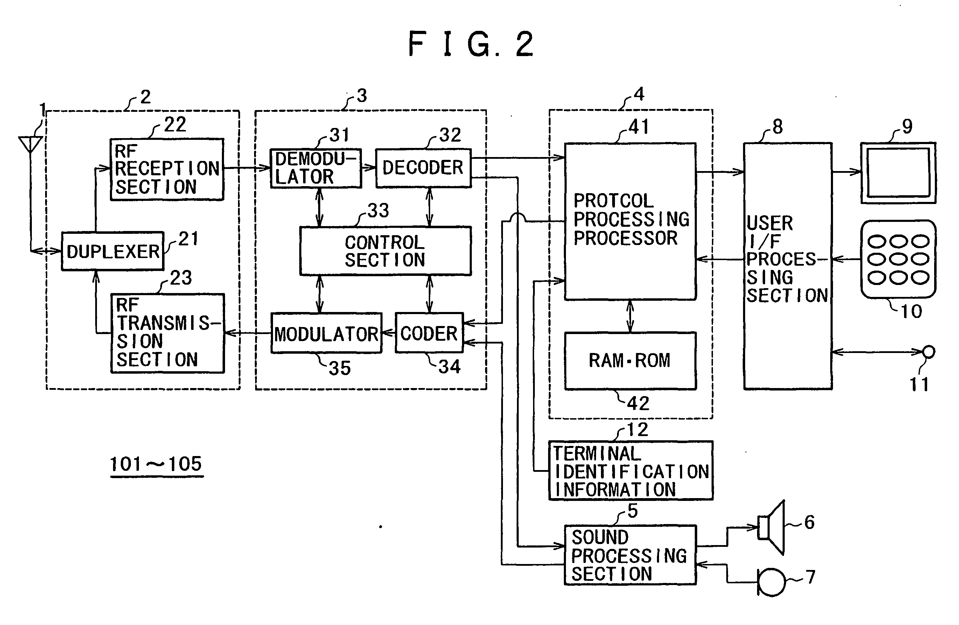

The following describes the wireless communication terminal constituting the wireless communication system configured as shown in FIG. 1. FIG. 2 is a block diagram showing a configuration of the wireless communication terminal forming the wireless communication system shown in FIG. 1.

As shown in FIG. 2, each of the wireless communication terminals 101 through 105 according to the embodiment comprises an antenna 1, an analog circuit 2, a baseband processing section 3, a protocol processing section 4, a sound processing section 5, a speaker (receiver) 6, a microphone (transmitter) 7, a user interface processing section 8 (hereafter referred to as a user I/F processing section 8), a display section (display) 9, an input section (keypad) 10, an input/output terminal 11, and memory 12 for storing terminal identification information (terminal identifier).

As shown in FIG. 2, the analog circuit 2 comprises an antenna duplexer (hereafter simply referred to as a duplexer) 21, an RF receiver 22, and an RF transmitter 23.

In the wireless communication terminal according to the embodiment, the baseband processing section 3 comprises a demodulator 31, a decoder 32, a coder 34, and a modulator 35. Functions of these components select appropriate modulation and coding systems under control of a control section 33.

That is to say, the decoder 32 and the coder 34 in the baseband processing section 3 demodulates and decodes received signal in accordance with the modulation system and the coding system used for an intended communication system. The coder 34 and the modulator 35 encodes and modulates transmission data in accordance with the modulation system and the coding system used for an intended communication system.

The protocol processing section 4 is provided with a memory section 42 and a protocol processing processor 41. The memory section 42 comprises RAM (Random Access Memory) used as a work area for processing and ROM (Read Only Memory) to store necessary programs and data. The protocol processing processor 41 is configured to be able to generate not only notification information and control information such as the cluster information transmitted by the broadcast communication, but also transmission data to be transmitted to a specified destination.

### [Reception operations]

Reception operations will now be described. A signal is received at the antenna 1 and is supplied to the RF reception section 22 via the duplexer 21 of the analog circuit 2. The RF reception section 22 converts the supplied signal into a digital signal and supplies it to the demodulator 31 of the baseband processing section 3.

As mentioned above, the demodulator 31 demodulates the supplied signal in accordance with the demodulation system used for the currently available communication system and supplies the demodulated signal to the decoder 32.

The decoder 32 decodes the supplied signal in accordance with the coding system used for the currently available communication system and separates the signal into sound data and the other data such as display data. The sound data is supplied to the sound processing section 5. The data other than the sound data is supplied to the protocol processing processor 4i of the protocol processing section 4.

The protocol processing processor 41 extracts necessary information from the signal in accordance with a data format of the currently available communication system. When the supplied signal is found to be display data, for example, the protocol processing processor 41 generates a display signal to be supplied to the display section and supplies the generated signal to the displaysection 9 via the user I/F processing section 8. In this manner, a display screen of the display section 9 displays characters or images corresponding to the received data.

When the supplied signal is found to be control information or a program, it is written to the RAM of the memory section 42. Further, a large amount of data transmitted to the local wireless communication terminal passes through the user I/F processing section 8 and the input/output terminal 11 and can be recorded in a storage medium of a storage apparatus connected thereto.

The sound processing section 5 converts the supplied sound data into an analog signal, generates a sound signal to be supplied to the speaker, and then supplies it to the speaker 6 . In this manner, the speaker generates a sound corresponding to the received sound signal.

### [Transmission operations]

Transmission operations will now be described. A sound collected by the microphone 7 is converted into an electric signal and is supplied to the sound processing section 5. The sound processing section 5 converts the sound signal from the microphone 7 into a digital signal and supplies it to the coder 34 . The coder 34 encodes the signal in accordance with the coding system used for the currently available communication system and supplies the coded signal to the modulator 35.

The modulator 35 modulates the supplied signal in accordance with the modulation system used for the currently available communication system and supplies the modulated signal to the RF transmission section of the analog circuit 2. The RF transmission section 23 converts the supplied digital signal into an analog signal. Further, the RF transmission section 23 amplifies the signal to generate a transmission RF signal and transmits (radiates) it from the antenna 1 via the duplexer 21.

The input section 10 inputs character data or a terminal identifier of the targeted destination wireless communication terminal. In addition, the input/output terminal 11 is used to supply data from an external storage apparatus, for example. These inputs are supplied to the protocol processing processor 41 via the user I/F processing section 8. The protocol processing processor 41 generates transmission data in accordance with the data formatusedfor the currently available communication system and supplies the data to the coder 41 of the baseband processing section 3.

As mentioned above, the coder 34 and the modulator 35 encode the signal and modulate the coded signal in accordance with the currently available communication system and supply the signal to the RF transmission section 23 of the analog circuit 2 . As mentioned above, the RF transmission section 25 converts the supplied signal into an analog signal, generates an RF transmission signal to be transmitted, and transmits (radiates) it through the antenna 1.

In this manner, the transmission and reception operations are performed to establish communication with the requesting wireless communication terminal in response to a communication request destined for the local terminal or to send a communication request to a targeted wireless communication terminal for communication with the destination.

The wireless communication terminal according to the embodiment is configured to be capable of the broadcast communication. Accordingly, it is possible to simultaneously transmit information to all the wireless communication terminals associating with the network-forming cluster without specifying destinations. Also during the broadcast communication, the protocol processing processor 41 generates transmission data provided with information indicating that the signal is transmitted by the broadcast communication. The generated data is transmitted through the coder 34, the modulator 35, the RF transmission section 23, the duplexer 21, and the antenna 1.

The wireless communication terminal according to the embodiment has functions of not only performing unicast (one-to-one) communication between wireless communication terminals, but also performing the broadcast communication. The cluster comprises all the wireless communication terminals capable of receiving broadcast communication data transmitted from one wireless communication terminal.

### [Newly associating with the cluster]

Even if there is provided the function of performing the broadcast communication, the broadcast communication must reliably ensure transmission of data to all the wireless communication terminals constituting the cluster. Otherwise, it is impossible to implement the wireless communication system (wireless LAN system) alternative to Ethernet (registered trademark) as the conventional wired LAN.

As mentioned above with reference to FIG. 1, let us consider a case where a wireless communication terminal tries to newly associate with the network formed by the wireless communication system according to the present invention. In the wireless communication system according to the embodiment, that new wireless communication terminal is allowed to associate with the network only when the reachability is ensured for communication between all the wireless communication terminals (associated wireless communication terminals) already associating with the network (i.e., constituting the cluster).

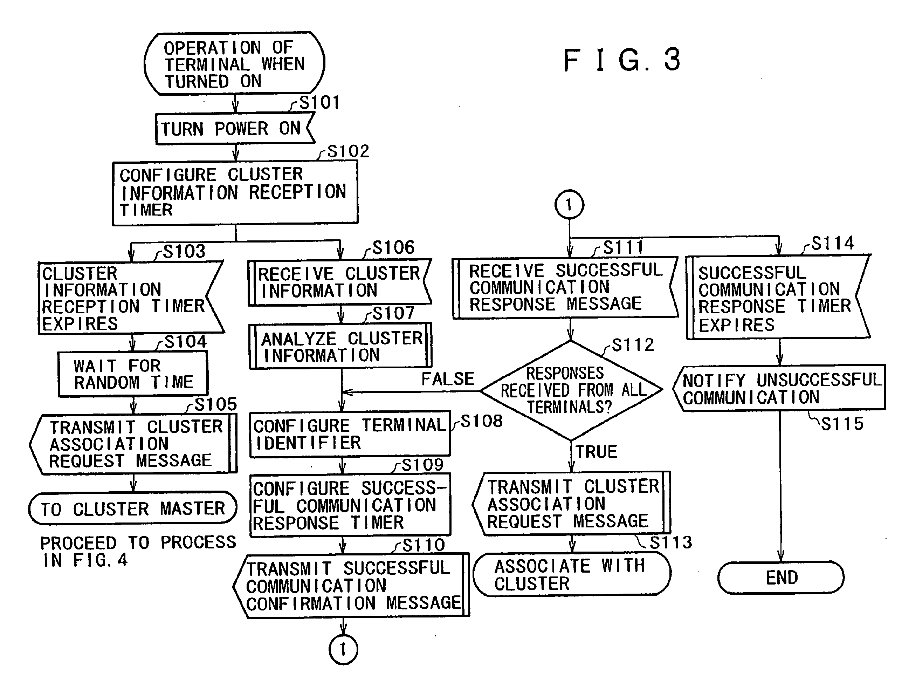

With reference to flowcharts in FIGS. 3, 4, and 5, the following describes operations of the wireless communication terminals constituting the wireless communication system according to the embodiment. FIGS. 3, 4, and 5 are flowcharts for showing operations of the wireless communication terminals that constitute the wireless communication system according to the embodiment and have the configuration as shown in FIG. 2.

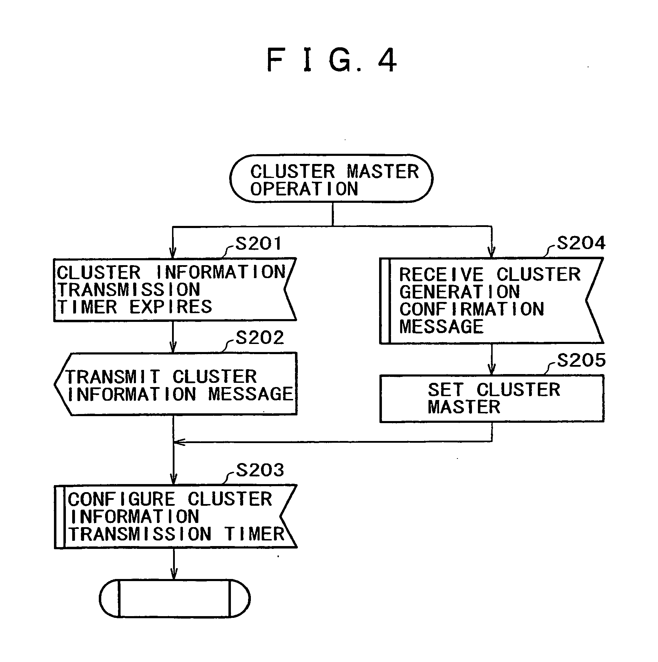

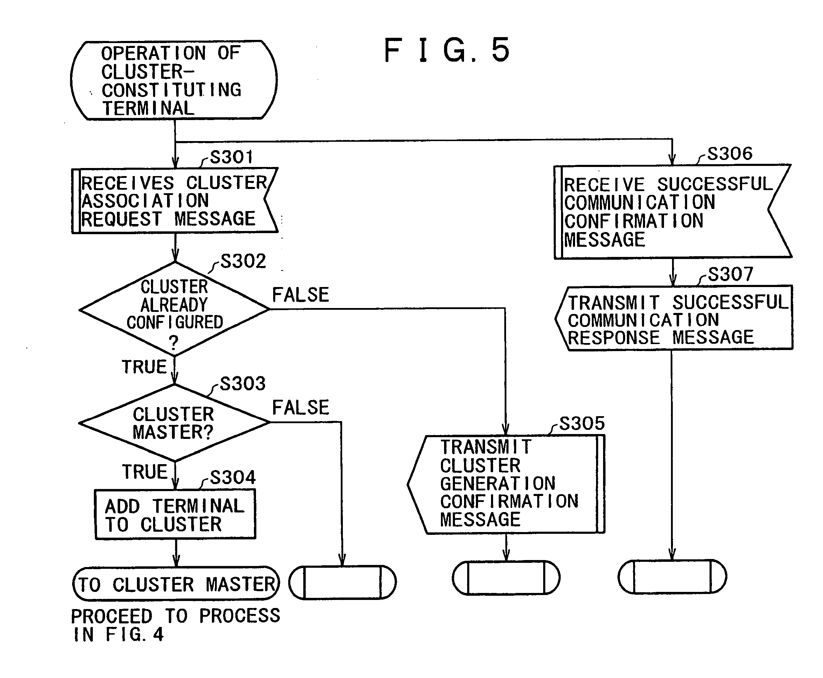

FIG. 3 is a flowchart showing operations of the wireless communication terminal that tries to newly associate with the cluster. FIG. 4 is a flowchart showing operations of thewireless communication terminal to be a new clustermaster and the wireless communication terminal that has become the cluster master. FIG. 5 is a flowchart showing operations of the cluster-constituting terminals including the cluster master (associated wireless communication terminals) that already associate with the cluster.

First, the following describes operations of the wireless communication terminal that tries to newly associate with the cluster. Let us consider that the wireless communication terminal according to the embodiment tries to newly associate with the cluster, connect to thewireless communication network formed by the cluster, andperformwireless communication. After the wireless communication terminal is turned on (step S101) as shown in FIG. 3, it configures a cluster information reception timer that works until the cluster information is received (step S102)

The wireless communication terminal newly associating with the cluster receives cluster information from another wireless communication terminal functioning as the cluster master (master wireless communication terminal), tobedescribed later, to determine whether or not an existing cluster is available nearby. If an existing cluster is available, the wireless communication terminal tries to associate with it. The cluster information reception timer is used to determine whether or not an existing cluster is available nearby.

The cluster information reception timer can be implemented as a software counter in the protocol processing processor 41 of the wireless communication terminal , for example . Though not shown in FIG. 2, the cluster information reception timer can be also implemented by a timer circuit provided for the wireless communication terminal.

When the cluster information is received until expiration of the cluster information reception timer (step S106), it is found that an existing cluster is available near the local terminal. The received cluster information is analyzed (step S107). A terminal identifier contained in the cluster information is retrieved and is specified as a transmission destination (step S108). After a successful communication response timer is set (step S109), a successful communication confirmation message is created. This message is transmitted to the wireless communication terminal (already associated in the cluster) specified at step S108 (step S110).

The process from steps S106 to S110 includes determining whether or not the cluster information is received, analyzing the cluster information, specifying the transmission destination, setting the successful communication response timer, creating and transmitting the successful communication confirmation message. The process is performed by, or under control of, e.g., the protocol processing processor 41 in the wireless communication terminal shown in FIG. 2.

Like the above-mentioned cluster information reception timer, the successful communication response timer can be implemented as a software counter in the protocol processing processor 41 of the wireless communication terminal. Though not shown in FIG. 2, the successful communication response timer can be also implemented by a timer circuit provided for the wireless communication terminal.

As will be discussed below, the successful communication confirmation message is transmitted at step S110 at a specified interval until the successful communication response message is received as a reply from the wireless communication terminal specified at step S108 or until the successful communication response timer specified at step S109 expires.

When the local terminal receives the successful communication response message as a reply from the wireless communication terminal specified at step S108 (step S111), it is found that the reachability is ensured for communication with the wireless communication terminal specified as the current destination. It is then determined whether or not all the wireless communication terminals already associating with the cluster responded (step S112).

At step S112, however, all the wireless communication terminals already associating with the cluster may not respond. In this case, the process from steps S108 to S112 is repeated to confirm responses with respect to all the wireless communication terminals (already associating with the cluster) specified by the terminal identifiers analyzed at step S107.

When it is determined at step S112 that all the wireless communication terminals already associating with the cluster responded, the reachability is ensured for communication with all the wireless communication terminals already associating with the cluster. The wireless communication terminal trying to newly associate with the cluster creates and transmits a cluster association request containing its own terminal identifier (step S113) to associate with the cluster. In this manner, the local terminal can associate with the cluster with the reachability ensured for communication with all the other terminals.

The process from steps S111 to S113 is also performed by, or under control of, e.g., the protocol processing processor 41 in the wireless communication terminal shown in FIG. 2.

On the other hand, the local terminal may not be able to receive a successful communication response message from the specified destination until expiration of the successful communication response timer (step S114). In this case, the terminal notifies a user that it cannot communicate with the wireless communication terminal as the specified destination (step S115). The protocol processing processor 41 performs step S114. The user I/F processing section 8 and the display section 9 are used for the process at step S115 under control of the protocol processing processor 41.

A user of the wireless communication terminal tries to newly associate with the cluster and may be notified that the reachability is not ensured. In such case, the user can take proper action such as changing the geographical disposition of the wireless communication terminal or disposing a new repeater.

Let us assume that the cluster is already formed according to the process from steps S106 to S115 in FIG. 3 and that the reachability is ensured for communication between the wireless communication terminals constituting the cluster. Under this condition, the user can associate with the cluster and perform the unicast communication and the broadcast communication with all the wireless communication terminals constituting the cluster.

If the reachability is not ensured, this is notified to the user. The user can take proper action such as repositioning the wireless communication terminal to promptly dispose the environment for ensuring the communication reachability. Also in this case, the user can associate with the cluster and perform the unicast communication and the broadcast communication with all the wireless communication terminals constituting the cluster.

The following describes a process to create a new cluster when there is no cluster available. As shown in FIG. 3, the terminal is turned on (step S101) to receive the cluster information. If there is no cluster nearby, the terminal cannot receive the cluster information. As a result, the cluster information reception timer expires (step S103).

When the cluster information reception timer expires, it is assumed that there is no cluster nearby. An attempt is made to create a new cluster. That is to say, the process waits for a random time (step S104), and then creates a cluster association request message and transmits it (step S105). Control advances to a cluster master process in FIG. 4 to be described. The process waits for association of another wireless communication terminal. When another wireless communication terminal associates, the local terminal becomes a cluster master to form a cluster.

The wait for random time at step S104 is provided to prevent collision between cluster association request messages from a plurality of terminals when two or more terminals are turned on simultaneously. At step S105, the cluster association request message is transmitted repeatedly at a specified interval.

The process from steps S103 to S105 is also performed by, or under control of, e.g., the protocol processing processor 41 in the wireless communication terminal shown in FIG. 2.

Referring now to FIG. 4, the following describes operations of the wireless communication terminal to become a new cluster master and those of the wireless communication terminal that has become the cluster master. The wireless communication terminal that tried to associate with the cluster repeatedly issues the cluster association request message at step S105 in FIG. 3. Thereafter, the same wireless communication terminal also performs the process in FIG. 4. The terminal waits until another wireless communication terminal associates with the cluster and transmits a cluster generation confirmation message corresponding to the cluster association request message issued at step S105 in FIG. 3.

When receiving the cluster generation confirmation message (step S204), the local terminal becomes the cluster master (step S205) and configures a cluster information transmission timer (step S203). Each time the cluster information transmission timer configured at step S203 expires (step S201) thereafter, the local terminal creates a cluster information message (cluster information) and transmits it (step S202). When the portable wireless communication terminal becomes the cluster master, it repeats steps S201 to S203 of the process in FIG. 4 thereafter.

The process in FIG. 4 is also performed by, or under control of, e.g., the protocol processing processor 41 in the wireless communication terminal shown in FIG. 2.

Referring now to FIG. 5, the following describes operations of the wireless communication terminal already associating with the cluster and cluster-constituting terminals including the cluster master that can accept a message from the wireless communication terminal newly requesting association in the cluster.

When a cluster-constituting terminal already associates with the cluster, it waits for arrival of the successful communication confirmation message or the cluster association request message. As mentioned above with reference to FIG. 3, the successful communication confirmation message is issued at step S110 for confirming whether or not the communication is available. The cluster association request message is issued at step S113 or S105.

The cluster-constituting terminal receives a successful communication confirmation message from the wireless communication terminal that wishes to associate with the cluster (step S306). At this time, the cluster-constituting terminal creates and returns a successful communication response message to the wireless communication terminal that issued the successful communication confirmation message (step S307). In this manner, as mentioned above with reference to FIG. 3, the process from step S111 in FIG. 3 can continue in the wireless communication terminal that wishes to associate with the cluster.

The cluster-constituting terminal receives a cluster association request message from the wireless communication terminal that wishes to associate with the cluster (step S301) . The cluster-constituting terminal confirms whether or not a cluster is configured, i.e., whether or not the cluster information is transmitted by the broadcast communication (step S302). When the local terminal is a member of the existing cluster, the local terminal confirms whether or not it is the cluster master (step S303).

When the local terminal is found to be the cluster master at step S303, it adds, as a cluster member, the terminal that issues the cluster association request message at step S113 in FIG. 3 (step S304). Control advances to the cluster master process in FIG. 4 to generate and transmit the cluster information containing the terminal identifier of thewireless communication terminal added as the cluster member.

When it is determined at step S302 that no cluster is configured, the terminal creates and transmits the cluster generation confirmation message. The wireless communication terminal that issued the cluster association request message becomes the cluster master to control formation of a cluster.

When the local terminal is found not to be the cluster master at step S303, it does nothing and terminates the process for awaiting arrival of the cluster association request message.

The process in FIG. 5 is also performed by, or under control of, e.g., the protocol processing processor 41 in the wireless communication terminal shown in FIG. 2.

As already described with reference to FIGS. 3, 4, and 5, each of the wireless communication terminals constituting the wireless communication system according to the embodiment can be the cluster master or a cluster member.

When a new terminal tries to associate with the cluster, the cluster master transmits the cluster information containing terminal identifiersof all thewireless communication terminals already associating with the cluster. The would-be associate terminal performs the unicast communication with all thewireless communication terminals specified by the terminal identifiers. After the reachability is ensured for the communication with all the wireless communication terminals associating with the cluster, the would-be associate terminal can associate with the cluster for communication.

In this case, the reachability is ensured for communication between all the wireless communication terminals associating with the cluster. If the broadcast communication is performed, all the wireless communication terminals associating with the cluster can reliably receive signals transmitted by the broadcast communication. Therefore, it is possible to construct the wireless communication system that functions according to completely the same protocol as Ethernet (registered trademark) for wired LANs.

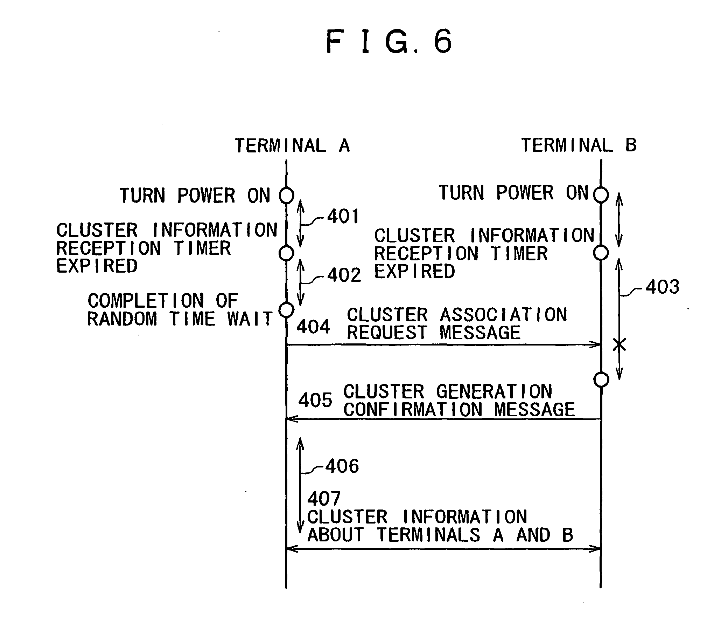

Referring now to sequence diagrams (signal flows) in FIGS. 6, 7, and 8, the following describes operations of "creating a new cluster" and "associating with the existing cluster" for the wireless communication terminals constituting the wireless communication system according to the present invention described with reference to FIGS. 3, 4, and 5.

FIG. 6 is a sequence diagram showing operations to generate a cluster between wireless communication terminals A and B as two wireless communication terminals when no existing cluster is available. The example in FIG. 6 assume that the wireless communication terminals A and B are turned on almost simultaneously.

When turned on, the wireless communication terminals A and B attempt to receive the cluster information for a time period 401 (expiration of the cluster information reception timer) . FIG. 6 assumes that no existing cluster is available. It is impossible to receive the cluster information transmitted from the cluster master by the broadcast communication. Therefore, the cluster information reception timer expires (equivalent to step S103 in FIG. 3).

After the cluster information reception timer expires, a random-time wait occurs (equivalent to step S104 in FIG. 3) . The wireless communication terminal A waits for a time period 402. The wireless communication terminal B waits for a time period 403. Thereafter, eitherwireless communication terminal transmits a cluster association request message (equivalent to step S105 in FIG. 3) . According to the example in FIG. 6, the wait time 402 for the wireless communication terminal A is shorter than the wait time 403 for the wireless communication terminal B. The wireless communication terminal A first reaches the expiration of the wait time and consequently transmits the cluster association request message (step 404).

The wireless communication terminal B receives the cluster association request message before expiration of the random time wait. The wireless communication terminal B cancels the random time wait and enters a subsequent cluster generation process. After receiving the cluster association request message from wireless communication terminal A, the wireless communication terminal B transmits a cluster generation confirmation message to the wireless communication terminal A (step 405).

After receiving the cluster generation confirmation message, the wireless communication terminal A becomes the cluster master (equivalent to step S205 in FIG. 4) . The wireless communication terminal A generates and transmits the cluster information at a specified interval, i.e., at specified time interval 406 dependent on the cluster information transmission timer configured at step S203 in FIG. 4. The wireless communication terminal B can associate with the cluster in which thewireless communication terminal A becomes the clustermaster. The wireless communication terminal B becomes capable of communication.

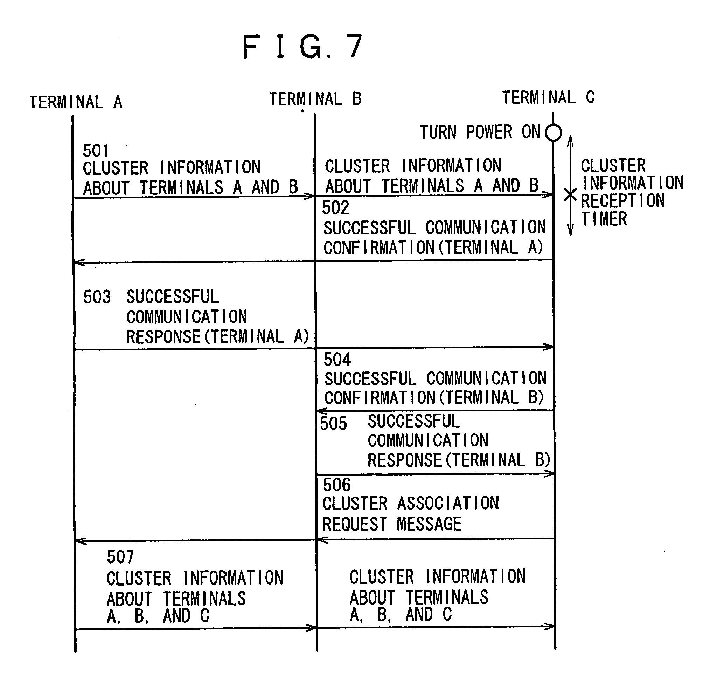

FIG. 7 is a sequence diagram showing operations for another new wireless communication terminal to associate with an already existing cluster. The example here assumes that a cluster is already generated between the wireless communication terminals A and B and that another wireless communication terminal C attempts to associate with the cluster where the wireless communication terminal A is the cluster master.

As shown in FIG. 7, the wireless communication terminal A functions as the cluster master in the existing cluster and transmits the cluster information containing terminal identifiers of the wireless communication terminals A and B by means of the broadcast communication (step 501).

After powered on, the wireless communication terminal C receives the cluster information from the wireless communication terminal A. The wireless communication terminal C uses terminal identifiers contained in the received cluster information and identifies the wireless communication terminals A and B constituting the cluster. The wireless communication terminal C issues a successful communication confirmation message to each of the wireless communication terminals A and B (steps 502 and 504).

When the wireless communication terminals A and B return responses to the successful communication confirmation message (steps 503 and 505), the wireless communication terminal C assumes that the reachability is ensured for communication with all the terminals constituting the cluster. The wireless communication terminal C then transmits a cluster association request message (step 506).

The wireless communication terminal A, functioning as the cluster master, receives the cluster association request message from the wireless communication terminal C. The wireless communication terminal A transmits the subsequent cluster information by adding to it the terminal identifier of the wireless communication terminal C (step 507).

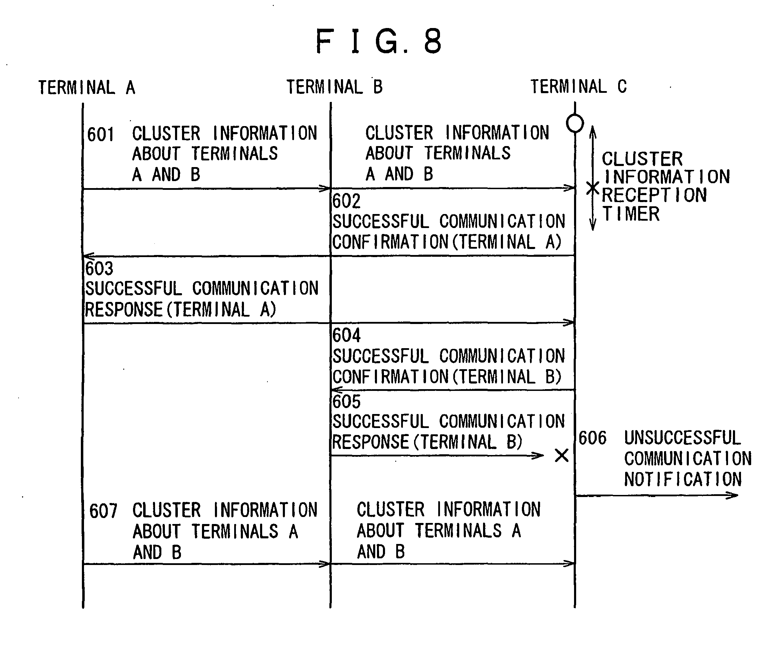

FIG. 8 is a sequence diagram showing operations when a cluster is already available, another new wireless communication terminal associates with the cluster, and a successful communication confirmation is incomplete due to some cause.

Like the example in FIG. 7, the example in FIG. 8 assumes that a cluster is already formed between the wireless communication terminals A and B and that the wireless communication terminal C attempts to associate with the cluster where the wireless communication terminal A functions as the clustermaster. As indicated by step 605, however, this example shows the unsuccessful arrival of a response message to the successful communication confirmation from the wireless communication terminal B.

In this case, the wireless communication terminal C notifies a user that the terminal C cannot communicate with all the wireless communication terminals constituting the cluster (step 606) . Therefore, the cluster information at step 607 and later contains still terminal identifiers of the wireless communication terminals A and B only because the wireless communication terminal C cannot associate with the cluster.

If no cluster is configured as mentioned above with reference to FIG. 6, the wireless communication system according to the embodiment enables that the wireless communication terminal first requesting association in the cluster becomes the cluster master to configure the cluster. There is no limitation on configuring the cluster such as assigning a specific wireless communication terminal to the cluster master, making it possible to flexibly configure the cluster.

When the wireless communication terminal attempts to newly associate with the cluster as mentioned above with reference to FIG. 7, that terminal first confirms availability of wireless communication with all the wireless communication terminals already associating with the cluster, and then is allowedto associate with the cluster. Further, the association in the cluster is allowed by ensuring the reachability of signals for the broadcast communication. Consequently, it is possible to configure the wireless communication system (wireless LAN system) compliant with wired LAN protocols such as Ethernet (registered trademark) that ensures the broadcast communication.

As mentioned above with reference to FIG. 8, the wireless communication terminal attempts to associate with the cluster and may not be able to wirelessly communicate with all the wireless communication terminals already associating with the cluster. In such case, the would-be associate wireless communication terminal notifies this to its user. The user can promptly know why he or she cannot associate with the cluster. The user of the wireless communication terminal can quickly take proper action such as translocating the wireless communication terminal or providing a repeater. It is possible to fast provide an environment for enabling communication with all the wireless communication terminals already associating with the cluster.

When the wireless communication system according to the embodiment is configured as shown in FIG. 1, for example, a wireless communication terminal other than the cluster master may withdraw from the cluster in which that wireless communication terminal has associated. A specified operation can be performed to issue a message that includes the local terminal's identifier and notifies a with drawal from the cluster. In this manner, it is possible to exclude the withdrawing wireless communication terminal's identifier from the cluster information transmitted from the cluster master.

At a specified timing or interval, for example, each of the wireless communication terminals associating with the cluster may issue a message notifying the cluster master that they associate with the cluster. In this manner, the cluster master can accurately keep track of the wireless communication terminals associating with the cluster. The cluster master can always create and transmit the cluster information comprising terminal identifiers of the wireless communication terminals associating with the cluster.

The wireless communication terminal as the cluster master may withdraw from the cluster. In this case, no cluster information is issued. If no cluster information is received after a specified time, the wireless communication terminal having a high priority is selected from those associating with the cluster and becomes the new cluster master. The new cluster master can create the cluster information and broadcast it at a specified cycle.

In this case, it is necessary to prioritize the wireless communication terminals associating with the cluster. The wireless communication terminals can be prioritized variously, e.g., in the ascending or descending order of association in the cluster or terminal identifies.

While the embodiment has described that the wireless communication terminal first requested association in the cluster becomes the cluster master, the present invention is not limited thereto. It is also possible to assign the wireless communication terminal most recently associated in the cluster to be the cluster master, i.e., to sequentially inherit the cluster master.

While the embodiment has described that the wireless communication terminal is also capable of sending and receiving sound signals, the present invention is not limited thereto. It is possible to apply the wireless communication terminal according to the present invention to various types of electronic devices such as a personal computer and its peripheral devices having the wireless communication capability and to configure the wireless communication system according to the present invention.

As mentioned above, in the system that uses no access points and performs communication between wireless communication terminals, the present invention can provide the simple and reliable procedure (method) of ensuring the communication reachability in the network comprising a plurality of wireless communication terminals.

It is possible to simply and reliably configure the wireless communication system (wireless LAN system) compliant with the wired LAN protocol without greatly changing the wireless communication terminal configuration. Accordingly, the wireless communication terminal according to the present invention is free fromconventional problems suchas complication of the configuration.

## Claims

1. A wireless communication system comprising a plurality of wireless communication terminals (101-105) having unique terminal identifiers by using one of the plurality of wireless communication terminals (101-105) as a terminal having a master wireless communication unit to form an ad hoc network,
wherein the master wireless communication unit comprises:
an association request receiving means for receiving a request transmitted at any time from another wireless communication terminal to associate with a network of the wireless communication system;
an associate terminal information forming means for forming associate terminal information comprising a set of the terminal identifiers of already associating wireless communication terminals including the terminal identifier which is assigned to the other wireless communication terminal as an origin of the association request and is included in the association request received by the association request receiving means; and
an associate terminal information transmitting means for periodically broadcasting the associate terminal information formed by the associate terminal information forming means,
wherein a wireless communication terminal attempting to associate with a network of the wireless communication system comprises:
an associate terminal information receiving means for receiving the associate terminal information transmitted by the associate terminal information transmitting means of the master wireless communication unit;
a confirmation means for enabling and confirming possibility of communication with already associating wireless communication terminals specified by the terminal identifiers included in the associate terminal information received by the associate terminal information receiving means;
an association request generating means for generating, when the confirmation means confirms possibility of communication with all the already associating wireless communication terminals, an association request including a terminal identifier of the wireless communication terminal attempting at association;
an association request transmitting means for transmitting the association request generated by the association request generating means to the master wireless communication terminal; and
a notification means for notifying, when the confirmation means cannot confirm communication with all of the already associating wireless communication terminals, that no communication reachability can be ensured.

2. A wireless communication system according to claim 1, wherein, when the wireless communication terminal attempting to associate with the wireless communication system does not receive associate terminal information within a specified time, the association request generating means is arranged to generate an association request including a terminal identifier of the wireless communication terminal attempting at association and the association request transmitting means is arranged to transmit the generated association request.

3. A wireless communication terminal for use in a wireless communication system according to claim 1, the wireless communication terminal comprising:
an associate terminal information receiving means for receiving the associate terminal information transmitted by the associate terminal information transmitting means of the master wireless communication unit;
a confirmation means for confirming possibility of communication with already associating wireless communication terminals specified by the terminal identifiers included in the associate terminal information received by the associate terminal information receiving means;
an association request generating means for generating, when the confirmation means confirms possibility of communication with all the already associating wireless communication terminals, an association request including a terminal identifier of the wireless communication terminal;
an association request transmitting means for transmitting the association request generated by the association request generating means to the master wireless communication terminal; and
a notification means for notifying, when the confirmation means cannot confirm communication with all of the already associating wireless communication terminals, that no communication reachability can be ensured.

4. A wireless communication terminal according to claim 3, wherein, when the wireless communication terminal attempting to associate with the wireless communication system does not receive associate terminal information within a specified time, the association request generating means is arranged to generate an association request including a terminal identifier of the wireless communication terminal, and the association request transmitting means is arranged to transmit the generated association request.

5. A method of associating in a wireless communication system comprising a plurality of wireless communication terminals (101-105) having unique terminal identifiers by using one of the plurality of wireless communication terminals (101-105) as a terminal having a master wireless communication unit to form an ad hoc network, comprising the steps of:
performing, in the master wireless communication unit, the steps of:
forming associate terminal information comprising a set of the terminal identifiers of already associating wireless communication terminals and
periodically broadcasting the associate terminal information; and
performing, in a wireless communication terminal attempting to associate with the wireless communication system, the steps of:
receiving the associate terminal information transmitted from the master wireless communication unit; and
confirming possibility of communication with already associating wireless communication terminals specified by the terminal identifiers included in the received associate terminal information;
when there is confirmed the possibility of communication with all the already associating wireless communication terminals, generating an association request including a terminal identifier of the wireless communication terminal attempting at association and transmitting the generated association request to the master wireless communication unit; and
when there is not confirmed the possibility of communication with all of the wireless communication terminals, allowing the wireless communication terminal attempting to associate with the wireless communication system to notify that no communication reachability can be ensured.

6. A method of associating in a wireless communication system according to claim 5, further comprising performing, in the wireless communication terminal attempting to associate with the wireless communication system, the steps of, when the wireless communication terminal attempting to associate with the wireless communication system does not receive associate terminal information within a specified time, generating the association request including a terminal identifier of the wireless communication terminal attempting at association, and transmitting the generated association request.

## Patentansprüche

1. Drahtloses Kommunikationssystem, umfassend eine Mehrzahl von drahtlosen Kommunikationsendgeräten (101-105), die eindeutige Endgeräte-Identifizierer aufweisen, durch Verwendung eines aus der Mehrzahl der drahtlosen Kommunikationsendgeräte (101-105) als Endgerät, welches eine drahtlose Hauptkommunikationseinheit aufweist, um ein Ad-hoc-Netzwerk zu bilden,
wobei die drahtlose Hauptkommunikationseinheit umfasst:
eine Zuordnungsanforderungs-Empfangseinrichtung zum Empfangen einer Anforderung, die zu irgendeinem Zeitpunkt von einem anderen drahtlosen Kommunikationsendgerät übertragen wird, um sich mit einem Netzwerk des drahtlosen Kommunikationssystems zu verbinden;
eine Verbindungsendgeräteinformations-Bildungseinrichtung zum Bilden einer Partnerendgeräteinformation, die eine Satz von Endgeräte-Identifizierem von sich bereits verbindenden drahtlosen Kommunikationsendgeräten umfasst, enthaltend den Endgeräte-Identifizierer, der dem anderen drahtlosen Kommunikationsendgerät als Ursprung der Verbindungsanforderung zugeordnet ist und der in der Verbindungsanforderung enthalten ist, die durch die Verbindungsanforderungs-Empfangseinrichtung empfangen wird;
und eine Verbindungsendgeräteinformations-Sendeeinrichtung zum periodischen Senden der durch die Verbindungsendgeräteinformations-Bildungseinrichtung gebildeten Verbindungsendgeräteinformation,
wobei ein drahtloses Kommunikationsendgerät, welches versucht, sich mit einem Netzwerk des drahtlosen Kommunikationssystems zu verbinden, umfasst:
eine Verbindungsendgeräteinformations-Empfangseinrichtung zum Empfangen der Verbindungsendgeräteinformation, welche durch die Verbindungsendgeräteinformations-Sendeeinrichtung der drahtlosen Hauptkommunikationseinheit gesendet ist;
eine Bestätigungseinrichtung zum Ermöglichen und Bestätigen der Möglichkeit einer Kommunikation mit sich bereits verbindenden bzw. verbundenen drahtlosen Kommunikationsendgeräten, die durch die Endgeräte-Identifizierer spezifiziert sind, welche in der Patnerendgeräteinformafion enthalten sind, die durch die Verbindungsendgeräteinformations-Empfangseinrichtung empfangen wird;
eine Verbindungsanforderungs-Erzeugungseinrichtung zum Erzeugen einer Verbindungsanforderung, die einen Endgeräte-Identifizierer des eine Verbindung versuchenden drahtlosen Kommunikationsendgerätes enthält, wenn die Bestätigungseinrichtung die Möglichkeit einer Kommunikation mit sämtlichen der sich bereits verbindenden drahtlosen Kommunikationsendgeräten bestätigt;
eine Verbindungsanforderungs-Sende- bzw. Übertragungseinrichtung zum Übertragen der durch die Verbindungsanforderungs-Erzeugungseintichtung erzeugten Verbindungsanforderung zu dem drahtlosen Hauptkommunikationsendgerät;
und eine Meldeeinrichtung zum Melden, dass keine Kommunikationserrchbarkeit sichergestellt werden kann, wenn die Bestätigungseinrichtung eine Kommunikation mit sämtlichen der sich bereits verbindenden drahtlosen Kommunikationsendgeräten nicht bestätigen kann.

2. Drahtloses Kommunikationssystem nach Anspruch 1, wobei die Verbindungsanforderungs-Erzeugungseinrichtung ausgelegt ist, um dann, wenn das eine Verbindung zu dem drahtlosen Kommunikationssystem versuchende drahtlose Kommunikationsendgerät eine Verbindungsendgeräteinformation innerhalb einer bestimmten Zeit nicht empfängt, eine Verbindungsinformation zu erzeugen, die einen Endgeräte-Identifizierer des drahtlosen Kommunikationsendgeräts enthält, das die Verbindung versucht, und wobei die Verbindungsanforderungs-Sendeeinrichtung ausgelegt ist, um die erzeugte Verbindungsanforderung zu übertragen.

3. Drahtloses Kommunikationsendgerät zur Verwendung in einem drahtlosen Kommunikationssystem nach Anspruch 1, wobei das drahtlose Kommunikationsendgerät umfasst:
eine Verbindungsendgeräteinformations-Empfangseinrichtung zum Empfangen der durch die Verbindungsrndgeräteinformations-Sendeeinrichtung der drahtlosen Hauptcommunikationseinheit übertragenen Verbindungsendgeräteinformation;
eine Bestätigungseinrichtung zum Bestätigen der Möglichkeit einer Kommunikation mit sich bereits verbindenden bzw. verbundenen drahtlosen Kommunikationsendgeräten, die durch Endgeräte-Identifizierer spezifiziert sind, welche in der durch die Verbindungsendgeräteinformations-Empfangseinrichtung empfangenen Verbindungsendgeräteinformation enthalten sind;
eine Verbindungsanforderungs-Erzeugungseinrichtung zum Erzeugen einer Verbindungsanforderung, die einen Endgeräte-Identinzierer des drahtlosen Kommunikationsendgeräts enthält, wenn die Bestätigungseinrichtung die Möglichkeit einer Kommunikation mit sämtlichen der sich bereits verbindenden bzw. verbundenen drahtlosen Kommunikationsendgeräten bestätigt;
eine Verbindungsanforderungs-Sendeeinrichtung zum Senden der durch die Verbindungsanforderungs-Erzeugungseirichtung erzeugten Verbindungsanforderung zu dem drahtlosen Hauptkommunikationsendgerät;
und eine Meldeeinrichtung zum Melden, dass keine Kommunikationserreichbarkeit gewährleistet werden kann, wenn die Bestätigungseinrichtung eine Kommunikation mit sämtlichen der sich bereits verbindenden bzw. verbundenen drahtlosen Kommunikationsendgeräten nicht bestätigen kann.

4. Drahtloses Kommunikationsendgerät nach Anspruch 3, wobei die Verbindunssanforderungs-Erzeugungseinrichtung ausgelegt ist, um dann, wenn das drahtlose Kommunikationsendgerät, welches versucht, sich mit dem drahtlosen Kommunikationssystem zu verbinden, eine Verbindungsendgeräteinformation innerhalb einer bestimmten Zeit nicht empfängt, eine Verbindungsanforderung zu erzeugen, welche einen Endgeräte-Identifizierer des drahtlosen Kommunikationsendgeräts enthält, und wobei die Verbindungsanforderungs-Sendeeinrichtung ausgelegt ist, um die erzeugte Verbindungsanforderung zu senden.

5. Verfahren zum Verbindung in einem drahtlosen Kommunikationssystem, umfassend eine Mehrzahl von drahtlosen Kommunikationsendgeräten (101-105), die eindeutige Endgeräte-Identifizierer aufweisen, durch Heranziehen eines aus der Mehrzahl der drahtlosen Kommumkationsendgeräte (101-105) als Endgerät, welches eine drahtlose Hauptkommunikationseinheit enthält, um ein Ad-hoc-Netzwerk zu bilden, umfassend die Schritte:
Ausführen der Schritte in der drahtlosen Hauptkommunikstionseinheit:
Bilden einer Verbindungsendgeräteinformation, die einen Satz von Endgeräte-Identifizierern von sich bereits verbindenden bzw. verbundenen drahtlosen Kommunikadonsendgeräten umfasst,
periodisches Senden der Verbindungsendgeräteinformation;
und Ausführen der Schritte in einem drahtlosen Kommunikationsendgerät, das versucht, sich dem drahtlosen Kommunikationssystem zuzuordnen:
Empfangen der Verbindungsendgeräteinformation, die von der drahtlosen Hauptkommunikationseinheit übertragen ist;
und Bestätigen der Möglichkeit einer Kommunikation mit sich bereits verbindenden bzw. verbundenen drahtlosen Kommunikationsendgeräten, welche durch die Endgeräte-Identifizierer spezifiziert sind, die in der empfangenen Verbindungsendgeräteinformation enthalten sind;
wobei in dem Fall, dass die Möglichkeit einer Kommunikation mit sämtlichen der sich bereits verbindenden bzw. verbundenen drahtlosen Kommunikationsendgeräten bestätigt wird, eine Verbindungsanforderung erzeugt wird, die einen Endgeräte-Identifizierer des drahtlosen Kommunikationsendgeräts enthält, das eine Verbindung versucht, und die erzeugte Verbindungsanforderung an die drahtlose Hauptkommumkationseinheit übertragen wird;
und wobei in dem Fall, dass die Möglichkeit einer Kommunikation mit sämtlichen der drahtlosen Kommunikationsendgeräten nicht bestätigt wird, dem drahtlosen Kommunikationsendgerät, welches versucht, sich mit dem drahtlosen Kommunikationssystem zuzuordnen, ermöglicht wird, zu melden, dass keine Kommunikationserreichbarkeit gewährleistet werden kann.

6. Verfahren zum Zuordnen in einem drahtlosen Kommunikationssystem nach Anspruch 5, ferner umfassend in einem drahtlosen Kommunikationsendgerät, welches versucht, sich mit dem drahtlosen Kommunikationssystem zu verbinden, das Ausführen der Schritte, dass dann, wenn das drahtlose Kommunikationsendgerät, welches versucht, sich dem drahtlosen Kommunikationssystem zu verbinden, eine Verbindungsendgeräteinformation innerhalb einer bestimmten Zeit nicht empfängt, die Verbindungsanforderung erzeugt wird, welche einen Endgeräte-Identifizierer des drahtlosen Kommunikationsendgeräts enthält, das die Verbindung versucht, und die erzeugte Verbindungsanforderung übertragen wird.

## Revendications

1. Système de communication sans fil comprenant une pluralité de terminaux de communication sans fil (101 à 105) ayant des identifiants de terminaux uniques en utilisant l'un de la pluralité de terminaux de communication sans fil (101 à 105) en tant que terminal comportant une unité de communication sans fil maître pour former un réseau ad hoc,
dans lequel l'unité de communication sans fil maître comprend :
des moyens de réception de demande d'association pour recevoir une demande transmise à un instant quelconque par un autre terminal de communication sans fil pour s'associer à un réseau du système de communication sans fil ;
des moyens de formation d'informations de terminaux associés pour former des informations de terminaux associés comprenant un ensemble des identifiants de terminaux des terminaux de communication sans fil déjà associés comprenant l'identifiant de terminal qui est attribué à l'autre terminal de communication sans fil en tant qu'origine de la demande d'association et qui est inclus dans la demande d'association reçue par les moyens de réception de demande d'association ; et
des moyens de transmission d'informations de terminaux associés pour diffuser périodiquement les informations de terminaux associés formées par les moyens de formation d'informations de terminaux associés,
dans lequel un terminal de communication sans fil tentant de s'associer à un réseau du système de communication sans fil comprend :
des moyens de réception d'informations de terminaux associés pour recevoir les informations de terminaux associés transmises par les moyens de transmission d'informations de terminaux associés de l'unité de communication sans fil maître ;
des moyens de confirmation pour valider et confirmer la possibilité de communication avec les terminaux de communication sans fil déjà associés spécifiés par les identifiants de terminaux inclus dans les informations de terminaux associés reçues par les moyens de réception d'informations de terminaux associés ;
des moyens de génération de demande d'association pour générer, lorsque les moyens de confirmation confirment la possibilité de communication avec tous les terminaux de communication sans fil déjà associés, une demande d'association comprenant un identifiant de terminal du terminal de communication sans fil tentant une association ;
des moyens de transmission de demande d'association pour transmettre la demande d'association générée par les moyens de génération de demande d'association au terminal de communication sans fil maître ; et
des moyens de notification pour notifier, lorsque les moyens de confirmation ne peuvent pas confirmer la communication avec tous les terminaux de communication sans fil déjà associés, qu'aucune possibilité de communication ne peut être garantie.

2. Système de communication sans fil selon la revendication 1, dans lequel, lorsque le terminal de communication sans fil tentant de s'associer au système de communication sans fil ne reçoit pas les informations de terminaux associés dans les limites d'un temps spécifié, les moyens de génération de demande d'association sont agencés pour générer une demande d'association comprenant un identifiant de terminal du terminal de communication sans fil tentant une association et les moyens de transmission de demande d'association sont agencés pour transmettre la demande d'association générée.

3. Terminal de communication sans fil pour une utilisation dans un système de communication sans fil selon la revendication 1, le terminal de communication sans fil comprenant :
des moyens de réception d'informations de terminaux associés pour recevoir les informations de terminaux associés transmises par les moyens de transmission d'informations de terminaux associés de l'unité de communication sans fil maître ;
des moyens de confirmation pour confirmer la possibilité de communication avec les terminaux de communication sans fil déjà associés spécifiés par les identifiants de terminaux inclus dans les informations de terminaux associés reçues par les moyens de réception d'informations de terminaux associés ;
des moyens de génération de demande d'association pour générer, lorsque les moyens de confirmation confirment la possibilité de communication avec tous les terminaux de communication sans fil déjà associés, une demande d'association comprenant un identifiant de terminal du terminal de communication sans fil ;
des moyens de transmission de demande d'association pour transmettre la demande d'association générée par les moyens de génération de demande d'association au terminal de communication sans fil maître ; et
des moyens de notification pour notifier, lorsque les moyens de confirmation ne peuvent pas confirmer la communication avec tous les terminaux de communication sans fil déjà associés, qu'aucune possibilité de communication ne peut être garantie.

4. Terminal de communication sans fil selon la revendication 3, dans lequel, lorsque le terminal de communication sans fil tentant de s'associer au système de communication sans fil ne reçoit pas les informations de terminaux associés dans les limites d'un temps spécifié, les moyens de génération de demande d'association sont agencés pour générer une demande d'association comprenant un identifiant de terminal du terminal de communication sans fil, et les moyens de transmission de demande d'association sont agencés pour transmettre la demande d'association générée.

5. Procédé d'association dans un système de communication sans fil comprenant une pluralité de terminaux de communication sans fil (101 à 105) ayant des identifiants de terminaux uniques en utilisant l'un de la pluralité de terminaux de communication sans fil (101 à 105) en tant que terminal comportant une unité de communication sans fil maître pour former un réseau ad hoc, comprenant les étapes consistant à :
effectuer, dans l'unité de communication sans fil maître, les étapes consistant à :
former des informations de terminaux associés comprenant un ensemble des identifiants de terminaux des terminaux de communication sans fil déjà associés, et
diffuser périodiquement les informations de terminaux associés ; et
effectuer, dans un terminal de communication sans fil tentant de s'associer au système de communication sans fil, les étapes consistant à :
recevoir les informations de terminaux associés transmises par l'unité de communication sans fil maître ; et
confirmer la possibilité de communication avec les terminaux de communication sans fil déjà associés spécifiés par les identifiants de terminaux inclus dans les informations de terminaux associés reçues ;
lorsque la possibilité de communication avec tous les terminaux de communication sans fil déjà associés est confirmée, générer une demande d'association comprenant un identifiant de terminal du terminal de communication sans fil tentant une association et transmettre la demande d'association générée à l'unité de communication sans fil maître ; et
lorsque la possibilité de communication avec tous les terminaux de communication sans fil n'est pas confirmée, permettre au terminal de communication sans fil tentant de s'associer au système de communication sans fil de notifier qu'aucune possibilité de communication ne peut être garantie.

6. Procédé d'association dans un système de communication sans fil selon la revendication 5, comprenant en outre l'exécution, dans le terminal de communication sans fil tentant de s'associer au système de communication sans fil, des étapes consistant à, lorsque le terminal de communication sans fil tentant de s'associer au système de communication sans fil ne reçoit pas les informations de terminaux associés dans les limites d'un temps spécifié, générer la demande d'association comprenant un identifiant de terminal du terminal de communication sans fil tentant une association, et transmettre la demande d'association générée.
